# DEMANDE DE BREVET EUROPEEN

(11) **EP 1 337 091 A2**
(43) Date de publication de la demande: **20.08.2003**
(21) Numéro de dépôt: 03290409.6
(22) Date de dépôt: 19.02.2003
(51) Int. Cl.: H04L 29/06

(54) **Procédé de transmission de messages audio ou vidéo sur le réseau Internet**

(30) Priorité: 19.02.2002 FR 0202100
(71) Demandeur: Monduc, Michel Francis, 92600 Asnières sur Seine (FR)
(72) Inventeur: Monduc, Michel Francis, 92600 Asnières sur Seine (FR)
(74) Mandataire: Berger, Helmut

(57) **Abrégé**

L'invention concerne un procédé pour transmettre, à travers le réseau Internet et entre un serveur (ORD_EM) et un récepteur (ORD_REC) disposant d'un logiciel de navigation (NAVIG), un flux de signaux numériques (NUM) contenant des données (DRC) restituables sous une forme audible et / ou visible.

Selon l'invention, le flux de signaux (NUM) envoyé par le serveur comprend un module logiciel de contrôle (C) pour contrôler la transmission entre le serveur (ORD_EM) et le récepteur (ORD_REC), un module logiciel de lecture (L) pour lire les données restituables (DRC), et un module logiciel de gestion (G) pour coordonner ou gérer des opérations assignées au contrôleur (C) et au lecteur (L), ces modules téléchargeables (C, L, G) étant élaborés sous la forme de codes ou de commandes interprétables dans l'environnement du logiciel de navigation (NAVIG) préexistant sur le récepteur (ORD_REC).

## Description

La présente invention concerne, de façon générale, le domaine de la transmission d'informations numériques entre ordinateurs.

Plus précisément, l'invention concerne un procédé pour transmettre, à travers le réseau international d'interconnexion informatique (Internet), à partir d'un ordinateur serveur, et à destination d'au moins un ordinateur récepteur disposant d'un logiciel de navigation, un flux de signaux numériques qui contient au moins des données restituables sous une forme audible et / ou visible et qui est destiné à être exploité par le récepteur au moins pour restituer un message audio et / ou vidéo, ce procédé comprenant au moins une phase préliminaire d'élaboration du flux de signaux numériques et une phase de transmission de ce flux, et la phase préliminaire incluant elle-même au moins une étape de compression des données restituables.

Bien que le réseau Internet soit déjà largement utilisé comme canal de transmission de données audio ou vidéo, les procédés connus pour assurer cette transmission souffrent de plusieurs défauts ou limitations.

Tout d'abord, les données numériques qui doivent être restituées sous une forme audible et / ou visible pour un utilisateur humain installé devant l'ordinateur récepteur ne peuvent effectivement être restituées que si cet ordinateur est équipé d'un logiciel spécifique adapté à la fois au système d'exploitation mis en oeuvre par cet ordinateur récepteur et au format des données considérées.

Cette limitation est telle qu'il n'existe à ce jour aucun procédé de transmission et de restitution de signal vidéo à travers le réseau Internet qui puisse être mis en oeuvre par une fraction importante des ordinateurs raccordés à ce réseau.

En revanche, dès lors qu'un ordinateur est équipé pour pouvoir recevoir de telles données audio et / ou vidéo à travers le réseau Internet, l'utilisation ultérieure que fera de ces données le propriétaire de l'ordinateur qui les a reçues échappe en pratique à tout contrôle de la part de l'émetteur de ces données, de sorte que ces dernières peuvent être concrètement reproduites et utilisées en violation de tout éventuel droit d'auteur.

D'autre part encore, les procédés aujourd'hui connus de transmission et de restitution de signaux audio ou vidéo à travers le réseau Internet restent soumis, quant à leur possibilité pratique de mise en oeuvre, à la condition que ce réseau assure un haut débit de transmission, tout encombrement du réseau Internet conduisant à l'interruption de la communication et à la perte du signal audio et / ou vidéo.

Dans ce contexte, la présente invention a pour but de proposer un procédé d'exploitation de données audio et / ou vidéo transmises à travers le réseau Internet, qui permette de pallier l'un au moins des problèmes mentionnés ci-dessus, et qui, en particulier, soit utilisable de façon pratiquement universelle.

A cette fin, le procédé de l'invention, par ailleurs conforme à la définition générique qu'en donne le préambule ci-dessus, est essentiellement caractérisé en ce que cette phase préliminaire inclut également une étape de codage de modules logiciels téléchargeables comprenant au moins un module logiciel de contrôle ou contrôleur, un module logiciel de gestion ou gestionnaire, et un module logiciel de lecture des données restituables ou lecteur, en ce que les modules logiciels téléchargeables sont élaborés, au cours de l'étape de codage, sous la forme de codes ou commandes interprétables dans l'environnement du logiciel de navigation préexistant sur le récepteur, en ce que la phase préliminaire d'élaboration du flux de signaux numériques inclut en outre une étape de formatage au cours de laquelle les codes ou commandes constituant les modules logiciels téléchargeables et les données restituables sont concaténés ou combinés pour former le flux de signaux numériques, et en ce que le contrôleur, le lecteur et le gestionnaire sont respectivement interprétés par le récepteur, lors de la phase de transmission, au moins pour contrôler la transmission entre le serveur et le récepteur, pour lire les données restituables, et pour coordonner ou gérer des opérations assignées au contrôleur et au lecteur.

Dans le mode de réalisation préféré de l'invention, chaque module logiciel téléchargeable est codé, au cours de l'étape de codage, au moyen de commandes interprétables par un module de gestion de contenus animés préexistant sur le récepteur et traditionnellement intégré à l'environnement du logiciel de navigation.

La phase de transmission du flux de signaux numériques peut avantageusement inclure une étape d'enregistrement de ce flux dans une mémoire de masse du récepteur.

Dans ce cas néanmoins, il est utile de prévoir que l'étape de formatage comprenne l'insertion, dans le flux de signaux numériques, d'au moins une donnée d'identification et / ou de description du flux lui-même.

Lorsque le flux de signaux numériques contient au moins une donnée d'identification de l'origine du flux lui-même, il est ainsi possible de prévoir que les modules logiciels téléchargeables comprennent un module logiciel d'authentification, ou verrou, et que le verrou soit interprété par le récepteur au moins pour effectuer une comparaison entre la donnée d'identification d'origine et une variable d'environnement, telle que l'adresse du serveur dans le réseau, et pour respectivement autoriser ou interdire l'opération de lecture des données restituables par le lecteur selon que la comparaison révèle une correspondance ou une absence de correspondance entre la donnée d'identification d'origine et la variable d'environnement.

La donnée d'identification de l'origine du flux peut même être présente en plusieurs occurrences dans le flux de signaux numériques, de manière à permettre au verrou de vérifier de façon périodique le caractère autorisé de l'exploitation de ce flux en effectuant une comparaison entre chaque occurrence de la donnée d'identification d'origine et la variable d'environnement.

En pratique, le verrou est par exemple mis en oeuvre de façon autonome par rapport au gestionnaire, auquel ce verrou rend compte de sa décision d'autoriser ou d'interdire l'opération de lecture des données restituables.

Par ailleurs, il est avantageux de prévoir que le flux de signaux numériques contienne au moins une donnée de description du flux lui-même, définissant le débit minimum nécessaire entre le serveur et le récepteur pour permettre une restitution immédiate, en temps réel et ininterrompue du message audio et / ou vidéo, que le contrôleur évalue le débit réel de la transmission établie entre le serveur et le récepteur et le compare au débit minimum nécessaire, et que le contrôleur modifie les conditions de restitution des données restituables lorsque le débit réel de la transmission est inférieur au débit minimum nécessaire.

Lorsque le débit réel de la transmission est inférieur au débit minimum nécessaire, il est alors possible de prévoir que le contrôleur modifie les conditions de restitution des données restituables en adressant au serveur une requête d'émission de données restituables de moindre résolution.

Toujours dans le cas où le débit réel de la transmission est inférieur au débit minimum nécessaire, il est possible de prévoir, en variante ou de façon cumulative, que le contrôleur modifie les conditions de restitution des données restituables en stockant dans une mémoire tampon au moins une partie initiale des données restituables reçues, et en différant la restitution des données restituables au moins jusqu'à un instant postérieur au début de la réception des données restituables et à partir duquel les données restituables reçues au débit réel de la transmission pourront être restituées intégralement sans interruption du message audio et / ou vidéo correspondant à cette restitution.

Le contrôleur est de préférence mis en oeuvre de façon autonome par rapport au gestionnaire, rend compte au gestionnaire de sa décision de modifier les conditions de restitution des données restituables, et informe le gestionnaire qu'il peut commander au lecteur la restitution des données restituables.

En revanche, il est préférable que le lecteur soit mis en oeuvre et hors de fonctionnement par le gestionnaire, le lecteur pouvant offrir des fonctions propres de restitution des données restituables qui sont exécutées de façon autonome, mais à la condition générale que le gestionnaire autorise le fonctionnement de ce lecteur.

Le procédé de l'invention offre une grande richesse d'exploitation et permet notamment de prévoir que les modules logiciels téléchargeables comprennent au moins un module logiciel interactif qui est intégré au flux de données parmi les données restituables, qui est détecté par le lecteur, et qui est interprété par le récepteur pour exécuter des actions sous le contrôle du gestionnaire.

Dans le cas où les données restituables représentent une masse importante d'information, elles peuvent être découpées en une pluralité de séquences successives.

D'autres caractéristiques et avantages de l'invention ressortiront clairement de la description qui en est faite ci-après, à titre indicatif et nullement limitatif, en référence aux dessins annexés, dans lesquels:
- la Figure 1 est un schéma illustrant les deux phases significatives du procédé de l'invention ;
- la Figure 2 est un schéma représentant une structure possible du flux de signaux numériques émis par le serveur ; et
- la Figure 3 est un schéma illustrant les actions et interactions qu'assurent les différents modules logiciels, du côté du récepteur, lorsqu'ils sont interprétés.

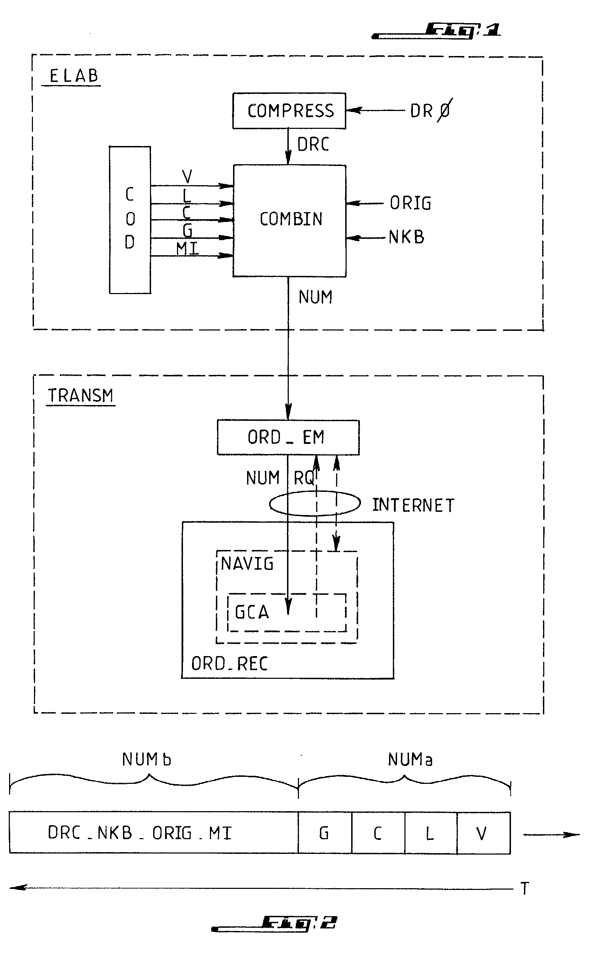

Comme annoncé précédemment, l'invention concerne (figure 1) un procédé pour transmettre, à travers le réseau international d'interconnexion informatique Internet, un flux de signaux numériques NUM depuis un ordinateur serveur ou émetteur ORD_EM jusqu'à un ordinateur récepteur ORD_REC, ce dernier disposant d'un logiciel de communication Internet, encore dit logiciel de navigation NAVIG.

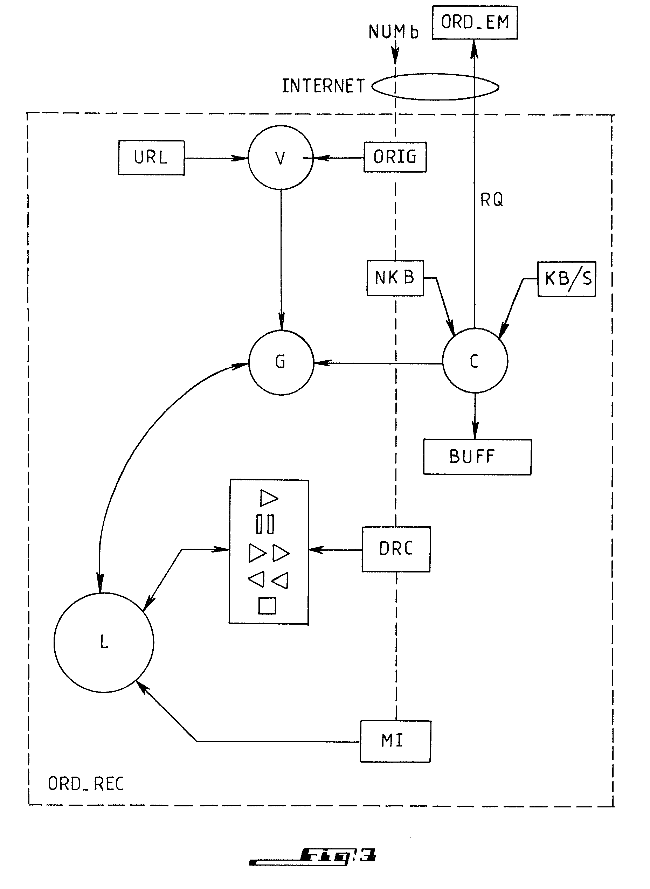

Le flux de signaux numériques NUM considéré est destiné à être exploité par le récepteur ORD_REC pour restituer un message audio et / ou vidéo à un utilisateur humain, ce flux contenant donc des données restituables sous une forme audible et / ou visible, et référencées DRC (figure 2).

Comme le montre la figure 1, le procédé de l'invention comprend essentiellement une phase préliminaire ELAB d'élaboration du flux de signaux numériques NUM, et une phase de transmission TRANSM de ce flux.

La phase préliminaire ELAB inclut elle-même, de façon connue en soi, une étape de compression des données, notée COMPRESS, et qui, à partir de données restituables brutes DR0, fournit les données restituables DRC sous une forme compressée.

Selon l'invention, cette phase préliminaire ELAB inclut également une étape de codage, notée COD, au cours de laquelle sont élaborés ou codés différents modules logiciels téléchargeables, et notamment un module logiciel de contrôle ou contrôleur C, un module logiciel de gestion ou gestionnaire G, et un module logiciel de lecture des données restituables ou lecteur L.

Comme il sera précisé ci-dessous, l'étape de codage COD peut comprendre l'élaboration d'autres modules logiciels téléchargeables tels que V et MI.

Au cours de cette étape de codage COD, les différents modules logiciels téléchargeables, tels que V, L, C, G, et MI, sont élaborés sous la forme de codes ou de commandes interprétables dans l'environnement du logiciel de navigation NAVIG préexistant sur le récepteur ORD_REC.

En d'autres termes, le procédé de l'invention tire ici parti de l'environnement logiciel dont dispose tout ordinateur ou pratiquement tout ordinateur relié au réseau Internet pour faire exécuter par l'ordinateur distant ORD_REC des tâches que cet ordinateur récepteur pourra interpréter sans difficulté, indépendamment du système d'exploitation sous lequel il fonctionne.

Dans le mode de réalisation préféré de l'invention, chacun des modules logiciels téléchargeables, tels que V, L, C, G, et MI, est codé, au cours de cette étape de codage COD, au moyen de commandes interprétables par un module de gestion de contenus animés GCA préexistant sur le récepteur ORD_REC et accompagnant généralement le logiciel de navigation proprement dit.

Plusieurs modules de gestion de contenus animés sont aujourd'hui connus, et notamment le module dit "Flash" de la Société Macromedia, le module dit "Live Motion" de la Société Adobe, et le module dit "Rave" de la Société Corel, le premier étant cependant de loin le plus répandu à ce jour.

La phase préliminaire ELAB d'élaboration du flux de signaux numériques NUM inclut par ailleurs une étape de formatage COMBIN, au cours de laquelle les codes ou commandes constituant les différents modules logiciels téléchargeables tels que V, L, C, G, et MI, ainsi que les données restituables DRC, sont concaténés ou combinés pour former le flux de signaux numériques NUM.

Pendant la phase de transmission TRANSM, le contrôleur C est interprété par le récepteur ORD_REC pour contrôler la transmission établie, à travers le réseau Internet, entre le serveur ORD_EM et ce récepteur ORD_REC.

Le lecteur L est, quant à lui, interprété par le récepteur ORD_REC, lors de la phase de transmission TRANSM, pour lire les données restituables DRC, dans des conditions qui seront précisées ultérieurement.

Enfin, le gestionnaire G est interprété par le récepteur ORD_REC, pendant la phase TRANSM, pour coordonner ou gérer les opérations qui sont assignées au contrôleur C et au lecteur L.

Comme le montre la figure 2, le flux de signaux numériques NUM est élaboré de manière que les différents modules téléchargeables V, L, C, et G occupent la première partie NUMa du flux, c'est-à-dire la partie de ce signal qui, au cours du temps T, arrive en premier au récepteur ORD_REC, les données restituables DRC occupant une seconde partie NUMb du flux NUM.

A moins qu'un module téléchargeable présent dans la partie NUMa du flux ne l'interdise, le flux de signaux numériques NUM est, tout au long de la phase de transmission TRANSM de ce flux, enregistré dans une mémoire de masse du récepteur ORD_REC, par exemple sur le disque dur de ce récepteur.

Pour permettre au procédé de l'invention d'offrir le plus grand nombre de fonctionnalités, il est utile, au cours de l'étape de formatage COMBIN, d'insérer dans le flux de signaux numériques NUM une ou plusieurs données d'identification ainsi qu'une ou plusieurs données de description du flux lui-même.

La donnée d'identification insérée dans le flux de signaux numériques NUM prend par exemple la forme d'une donnée ORIG identifiant l'origine du flux NUM lui-même, et est destinée à être utilisée par un module logiciel d'authentification V, ou verrou, appartenant à l'ensemble des modules logiciels téléchargeables élaborés au cours de l'étape COD.

Le verrou V est interprété par le récepteur ORD_REC pour effectuer une comparaison entre la donnée ORIG d'identification d'origine du flux et une variable d'environnement, notée URL (par référence à l'anglais "Universal Resource Locator", c'est-à-dire "localisateur universel de ressource"), et par exemple constituée par l'adresse du serveur ORD_EM dans le réseau Internet.

Dans le cas où la comparaison effectuée par le verrou V met en évidence une correspondance entre la donnée ORIG d'identification d'origine et la variable d'environnement URL, le verrou informe le gestionnaire G qu'il doit autoriser l'opération de lecture des données restituables DRC par le lecteur L.

Si au contraire la comparaison effectuée par le verrou V met en évidence un défaut de correspondance entre la donnée ORIG d'identification d'origine et la variable d'environnement URL, le verrou informe le gestionnaire G qu'il doit interdire l'opération de lecture des données restituables DRC par le lecteur L.

De préférence, la donnée ORIG d'identification de l'origine du flux est présente en plusieurs occurrences dans le flux NUM de signaux numériques, de sorte que le verrou V, qui effectue une comparaison entre chacune des occurrences de la donnée ORIG d'identification d'origine et la variable d'environnement URL, vérifie périodiquement que l'origine du flux NUM est authentique et que ce flux peut donc être librement exploité.

Le verrou V est mis en oeuvre par le module GCA de façon autonome par rapport au gestionnaire G, mais rend compte au gestionnaire G de sa décision d'autoriser ou d'interdire l'opération de lecture des données restituables DRC par le lecteur L.

La donnée de description insérée dans le flux de signaux numériques NUM prend par exemple la forme d'une donnée NKB définissant le débit minimum nécessaire entre le serveur ORD_EM et le récepteur ORD_REC pour permettre une restitution immédiate, en temps réel et ininterrompue du message audio et / ou vidéo, et est destinée à être utilisée par le contrôleur C.

Concrètement, la donnée NKB peut être représentative de la quantité d'information à laquelle correspondent les données restituables DRC, et / ou du temps requis pour la restitution de ces données sous la forme d'un message audio et / ou vidéo, cette seconde indication pouvant éventuellement être extraite de la première par le contrôleur C, dans l'hypothèse où ce contrôleur est informé de la vitesse de restitution des données DRC par le lecteur L.

Par ailleurs, le contrôleur C évalue le débit réel KB/S de la transmission établie entre le serveur ORD_EM et le récepteur ORD_REC, et compare ce débit réel au débit minimum nécessaire pour permettre une restitution immédiate, en temps réel et ininterrompue du message audio et / ou vidéo au fur et à mesure de sa transmission.

Lorsque le débit réel de la transmission KB/S est inférieur au débit minimum nécessaire, le contrôleur C modifie les conditions de restitution des données restituables DRC .

Pour ce faire, le contrôleur C peut adresser au serveur ORD_EM une requête RQ par laquelle il demande à ce serveur d'émettre des données restituables correspondant au même message audio et / ou vidéo, mais présentant une résolution moins élevée.

En effet, dans la mesure où la résolution des nouvelles données restituables demandées est moindre, la quantité d'information que requiert leur restitution, à durée constante du message audio et / ou vidéo à restituer, est elle-même moins importante, de sorte que le débit réel de la transmission peut être suffisant pour que ces données parviennent au récepteur ORD_REC assez vite pour pouvoir être restituées par le lecteur L au fur et à mesure de leur réception.

Pour modifier les conditions de restitution des données restituables DRC, le contrôleur C peut aussi, de façon cumulative ou alternative avec l'émission d'une requête RQ d'émission de données restituables de moindre résolution adressée au serveur ORD_EM, stocker dans une mémoire tampon BUFF du récepteur ORD_REC au moins une partie initiale des données restituables DRC reçues, et remettre à plus tard la restitution des données restituables DRC.

Bien qu'il suffise a priori au contrôleur C de différer la restitution des données restituables DRC jusqu'à l'instant à partir duquel les données restituables DRC, reçues au débit réel KB/S de la transmission, pourront être intégralement restituées sans interruption par le lecteur L, la restitution de ces données peut néanmoins être différée davantage en prévision d'une éventuelle chute du débit de transmission, et être par exemple différée jusqu'à la fin de cette transmission.

Le contrôleur C est mis en oeuvre par le module GCA de façon autonome par rapport au gestionnaire G, mais rend compte au gestionnaire G de sa décision de modifier les conditions de restitution des données restituables DRC.

En outre, le contrôleur C informe le gestionnaire G, le moment venu, qu'il peut commander au lecteur L la restitution des données restituables DRC.

Le lecteur L est piloté par le gestionnaire G, qui le met en oeuvre et hors de fonctionnement chaque fois que de besoin et aussi longtemps que nécessaire, sous réserve que le verrou V et le contrôleur C ne s'y opposent pas.

Néanmoins, dès lors que le gestionnaire G autorise le fonctionnement du lecteur L, toutes les fonctionnalités propres qu'offre ce lecteur L pour la restitution des données restituables DRC, telles que la lecture, la pause, l'avance rapide, le retour rapide et l'arrêt, repérées sur la figure 3 par leurs symboles habituels, sont exécutées de façon autonome.

Pour faciliter la mise en oeuvre de l'étape de formatage COMBIN, les données restituables DRC peuvent être découpées en une pluralité de séquences successives.

Les modules logiciels téléchargeables élaborés au cours de l'étape COD comprennent avantageusement des modules logiciels interactifs MI qui, au cours de l'étape de formatage COMBIN, sont intégrés au flux de données NUM au sein des données restituables DRC.

Les modules MI sont détectés par le lecteur L, et sont interprétés par le récepteur ORD_REC pour exécuter des actions sous le contrôle du gestionnaire G.

Une partie au moins de ces actions consiste, pour chaque module MI, à afficher à l'attention de l'utilisateur du récepteur ORD_REC, une icône ou un élément d'information spécifique indiquant à cet utilisateur l'existence d'une fonctionnalité qui lui est offerte.

Les autres actions exécutées par chacun de ces modules interactifs MI, et qui peuvent être de toute nature, sont déclenchées à l'initiative de l'utilisateur du récepteur ORD_REC, qui sélectionne l'icône ou l'élément d'information choisi.

Une fois que les signaux numériques NUM ont été enregistrés sur le récepteur ORD_REC, les données restituables DRC peuvent être relues à loisir par le lecteur L.

En revanche, si ces signaux NUM sont exportés vers un autre ordinateur par quelque moyen que ce soit, ce qui modifie de façon connue en soi la variable d'environnement URL, la condition de correspondance entre la donnée d'identification ORIG et la variable d'environnement URL cesse d'être satisfaite, de sorte que toute tentative pour relire les données DRC sera bloquée par le contrôleur C selon le processus précédemment décrit.

## Revendications

1. Procédé pour transmettre, à travers un réseau d'interconnexion informatique, par exemple du type Internet ou Intranet, à partir d'un ordinateur serveur (ORD_EM), et à destination d'au moins un ordinateur récepteur (ORD_REC) pourvu d'un dispositif d'interprétation de commandes ou module de gestion de contenus animés (GCA) pouvant être intégré dans un logiciel de navigation (NAVIG), un flux de signaux numériques (NUM), composé au préalable d'un ensemble cohérent de modules fonctionnels ou commandes initiales ou d'initialisation, comprenant au moins un module de réception initial et un module logiciel de lecture des données restituables ou lecteur (L) , pouvant être accompagnés d'un module logiciel de contrôle ou contrôleur (C), d'un module logiciel de gestion ou gestionnaire (G) et d'un module logiciel d'authentification (V) ou verrou, nécessaire à initialiser, assurer et contrôler les fonctionnalités et la restitution du flux de signaux numériques (NUM) et des éléments qui le compose, et dans un second temps, d'au moins un signal audio et/ou vidéo formant des données restituables (DRC) sous forme audible et/ou visible constituant l'objet de la transmission, le procédé comprenant au moins une phase préliminaire (ELAB) d'élaboration du flux de signaux numériques (NUM) et une phase de transmission (TRANSM) de ce flux, la phase préliminaire (ELAB) d'élaboration du flux de signaux numériques (NUM) incluant elle-même au moins une étape de compression des données restituables (DRC), une étape de codage (COD) de modules logiciels téléchargeables (V, L, C, G, MI) élaborés au préalable sous la forme de codes ou commandes interprétables par le module d'interprétation de commande ou module de gestion de contenus animés (GCA), et une étape finale de formatage (COMBIN) au cours de laquelle les codes ou commandes constituant les modules logiciels téléchargeables (V, L, C, G, MI) et les données restituables (DRC) sont concaténés ou combinés pour former le flux de signaux numériques (NUM), les codes ou commandes constituant les modules logiciels téléchargeables (V, L, C, G, MI) étant ensuite interprétés dans l'ordre de la phase de transmission (TRANSM) par l'ordinateur récepteur (ORD_REC) préalablement aux données restituables (DRC) pour au moins initialiser et permettre leur restitution et, le cas échéant, contrôler la transmission entre l'ordinateur serveur (ORD_EM) et l'ordinateur récepteur (ORD_REC), coordonner ou gérer des opérations assignées au contrôleur (C) et au lecteur (L) et/ou authentifier l'origine du flux de signaux numériques (NUM).

2. Procédé suivant la revendication 1, **caractérisé en ce que** la phase de transmission (TRANSM) du flux de signaux numériques (NUM) inclut une étape d'enregistrement de ce flux dans une mémoire de masse du récepteur (ORD_REC).

3. Procédé suivant la revendication 1 ou 2, **caractérisé en ce que** l'étape de formatage (COMBIN) comprend l'insertion, dans le flux de signaux numériques (NUM), d'au moins une donnée d'identification (ORIG) et / ou de description (NKB) du flux lui-même.

4. Procédé suivant la revendication 3, **caractérisé en ce que** le flux de signaux numériques (NUM) contient au moins une donnée (ORIG) d'identification de l'origine du flux lui-même, **en ce que** le module logiciel d'authentification (V), ou verrou des modules logiciels téléchargeables (V, L, C, G, MI) est interprété par le récepteur (ORD_REC) au moins pour effectuer une comparaison entre la donnée (ORIG) d'identification d'origine et une variable d'environnement (URL), telle que l'adresse du serveur (ORD_EM) dans le réseau, et pour respectivement autoriser ou interdire l'opération de lecture des données restituables (DRC) par le lecteur (L) selon que la comparaison révèle une correspondance ou une absence de correspondance entre la donnée (ORIG) d'identification d'origine et la variable d'environnement (URL).

5. Procédé suivant la revendication 4, **caractérisé en ce que** la donnée (ORIG) d'identification de l'origine du flux est présente en plusieurs occurrences dans le flux (NUM) de signaux numériques et **en ce que** le verrou (V) effectue une comparaison entre chaque occurrence de la donnée (ORIG) d'identification d'origine et la variable d'environnement (URL).

6. Procédé suivant la revendication 4 et 5, **caractérisé en ce que** le verrou (V) est mis en oeuvre de façon autonome par rapport au gestionnaire (G), auquel ce verrou (V) rend compte de sa décision d'autoriser ou d'interdire l'opération de lecture des données restituables (DRC).

7. Procédé suivant l'une quelconque des revendications précédentes combinée à la revendication 3, **caractérisé en ce que** le flux de signaux numériques (NUM) contient au moins une donnée (NKB) de description du flux lui-même, définissant le débit minimum nécessaire entre le serveur (ORD_EM) et le récepteur (ORD_REC) pour permettre une restitution immédiate, en temps réel et ininterrompue du message audio et / ou vidéo, **en ce que** le contrôleur (C) évalue le débit réel (KB/S) de la transmission établie entre le serveur (ORD_EM) et le récepteur (ORD_REC) et le compare au débit minimum nécessaire, et **en ce que** le contrôleur (C) modifie les conditions de restitution des données restituables (DRC) lorsque le débit réel de la transmission (KB/S) est inférieur au débit minimum nécessaire.

8. Procédé suivant la revendication 7, **caractérisé en ce que**, lorsque le débit réel (KB/S) de la transmission est inférieur au débit minimum nécessaire, le contrôleur (C) modifie les conditions de restitution des données restituables (DRC) en adressant au serveur (ORD_EM) une requête (RQ) d'émission de données restituables de moindre résolution.

9. Procédé suivant la revendication 7 ou 8, **caractérisé en ce que**, lorsque le débit réel (KB/S) de la transmission est inférieur au débit minimum nécessaire, le contrôleur (C) modifie les conditions de restitution des données restituables en stockant dans une mémoire tampon (BUFF) au moins une partie initiale des données restituables (DRC) reçues, et en différant la restitution des données restituables (DRC) au moins jusqu'à un instant postérieur au début de la réception des données restituables (DRC) et à partir duquel les données restituables (DRC) reçues au débit réel (KB/S) de la transmission pourront être restituées intégralement sans interruption.

10. Procédé suivant l'une quelconque des revendications 7 à 9, **caractérisé en ce que** le contrôleur (C) est mis en oeuvre de façon autonome par rapport au gestionnaire (G), **en ce que** le contrôleur (C) rend compte au gestionnaire (G) de sa décision de modifier les conditions de restitution des données restituables (DRC), et **en ce que** le contrôleur (C) informe le gestionnaire (G) qu'il peut commander au lecteur (L) la restitution des données restituables (DRC).

11. Procédé suivant l'une quelconque des revendications précédentes, **caractérisé en ce que** le lecteur (L) est mis en oeuvre et hors de fonctionnement par le gestionnaire (G), et **en ce que** ce lecteur (L) offre des fonctions propres de restitution des données restituables (DRC) qui sont exécutées de façon autonome à la condition générale que le gestionnaire (G) autorise le fonctionnement du lecteur (L).

12. Procédé suivant l'une quelconque des revendications précédentes, **caractérisé en ce que** les modules logiciels téléchargeables (V, L, C, G, MI) comprennent au moins un module logiciel interactif (MI) qui est intégré au flux de données (NUM) parmi les données restituables (DRC), qui est détecté par le lecteur (L) , et qui est interprété par le récepteur (ORD_REC) pour exécuter des actions sous le contrôle du gestionnaire (G).

13. Procédé suivant l'une quelconque des revendications précédentes, **caractérisé en ce que** les données restituables (DRC) sont découpées en une pluralité de séquences successives.
